# EUROPEAN PATENT APPLICATION

(11) **EP 4 506 235 A1**
(43) Date of publication of application: **12.02.2025**
(21) Application number: 22940353.0
(22) Date of filing: 27.05.2022
(51) Int. Cl.: B62H 3/08, B62H 3/02, B62K 3/00, B62J 45/00, B60L 53/38, H02J 50/90

(54) **CHARGING SYSTEM FOR WIRELESSLY CHARGING ELECTRIC BIKE AND PERSONAL MOBILITY VEHICLE**

(30) Priority: 27.04.2022 KR 20220051828
(71) Applicant: LG Electronics Inc., Yeongdeungpo-gu Seoul 07336 (KR)
(72) Inventor: PARK, Hyunghoon, Seoul 06772 (KR); KIM, Sungpil, Seoul 06772 (KR)
(74) Representative: Vossius & Partner Patentanwälte Rechtsanwälte mbB
(86) International application number: PCT/KR2022/007523
(87) International publication number: WO 2023/210859

(57) **Abstract**

The present invention relates to a charging station for a personal mobility vehicle capable of storing and charging a bike-type personal mobility vehicle or a kick scooter-type personal mobility vehicle, the charging station comprising: a basket box including a storage part having an open front surface to accommodate a basket of the bike-type personal mobility vehicle, and an opening exposing a power transmission module on the rear surface thereof; and a stem holder positioned above the basket box and on which a stem of the kick scooter-type personal mobility vehicle is seated, wherein the charging station can safely store various types of personal mobility vehicles.

## Description

### TECHNICAL FIELD

The present disclosure relates to a charging station for personal mobility devices capable of simultaneously storing and charging a personal mobility device.

### BACKGROUND ART

A personal mobility device is a single-person means for transportation using electricity, which may include an electric wheel, an electric kickboard, an electric bicycle, and an ultra-compact electric vehicle.

The electric kickboard, which is often used as a personal mobility device, may include a skateboard-shaped body portion, a support bar extending upward from the body portion, a handle extending from opposite sides of the support bar, and wheels rotatably mounted to the body portion and the support bar.

A recent personal mobility device includes a motor configured to provide rotational power and a battery configured to supply power to the motor.

Conventionally, there is a problem that personal mobility devices are left on the street after use, which hinders the movement of pedestrians and vehicles. In addition, since the personal mobility devices cannot be charged immediately after use, personnel who collect the personal mobility devices for charging or replace the batteries is needed, resulting in difficulties in maintenance.

In order to solve this, charging stations have been studied, but a conventional station is a modular type station, in which only one personal mobility device is mounted, and therefore the stations must be assembled one by one on site, which requires installation time.

In addition, since the stations are installed individually, it is necessary to install a distribution box for each station separately and to connect the stations to each other by wiring on site, which is cumbersome, and the stations are installed individually and are easily damaged due to weak rigidity.

### DISCLOSURE

### TECHNICAL TASK

It is an object of the present disclosure to provide a charging station capable of simultaneously storing and charging a personal mobility device.

It is another object of the present disclosure to provide a charging station applicable to a bicycle type personal mobility device with a basket in addition to a kickboard type personal mobility device.

It is another object of the present disclosure to provide a charging station with a simplified structure to reduce installation and manufacturing costs.

It is a further object of the present disclosure to provide a charging station having a structure in which a charging module is in tight contact with a power transmission module when a personal mobility device is mounted in the station.

### TECHNICAL SOLUTIONS

The present disclosure provides a charging station for personal mobility devices capable of receiving and charging a bicycle type personal mobility device or a kickboard type personal mobility device, the charging station including a power transmission module including a wireless power transmission coil, a frame in which the power transmission module is mounted, a receiving portion coupled to the frame, the receiving portion being located at a front surface of the power transmission module, and a wheel slope coupled to the frame, the wheel slope being configured to allow a front wheel of the personal mobility device to be seated thereon, wherein the receiving portion includes a basket box having an open front surface configured to allow a basket of the bicycle type personal mobility device to be received therethrough, the basket box including an opening formed in a rear surface thereof, the opening being configured to expose the power transmission module, and a stem holder located at an upper part of the basket box, the stem holder being configured to allow a stem of the kickboard type personal mobility device to be seated thereon.

The stem holder may include a first stem groove depressed rearward in the upper part of the basket box and stem guides protruding forward from both sides of the first stem groove.

The stem holder may further include a second stem groove depressed rearward at a position corresponding to the first stem groove at a lower part of the basket box.

The basket box may include inclined surfaces formed at left and right sides thereof such that the width gradually narrows in a rearward direction.

The power transmission module may include a curved module housing having left and right sides protruding in a forward direction, and the power transmission coil may be disposed in plural in a horizontal direction of the module housing.

The power transmission module may include a module housing configured to receive the power transmission coil, a module box hingedly coupled to left and right sides of the module housing, the module box being fixed to the frame, and an elastic portion located between a rear surface of a lower part of the module housing and the module box, and when the personal mobility device is located on the second inclined surface, the elastic portion may be compressed and a front surface of the module case may be tilted downward.

The wheel slope may include a first inclined surface extending upward and a second inclined surface extending downward from the first inclined surface, and the power transmission module and the charging module of the personal mobility device may be in contact with each other when the front wheel of the personal mobility device is located on the second inclined surface.

The charging station may further include sidewalls located on left and right sides of the wheel slope, the sidewalls being configured to fix the front wheel in a lateral direction.

The frame may include an upper frame extending in a horizontal direction, a pair of side frames located on opposite sides of the upper frame, and a lower frame configured to connect the pair of side frames to each other, the wheel slope being fixed to the lower frame, and the power transmission module and the receiving portion disposed along the upper frame in a horizontal direction may be provided in plural.

In another aspect, the present disclosure provides a wirelessly chargeable electric bicycle including a first frame including a stem and a handle coupled to an upper part of the stem, a second frame pivotably coupled to the stem, a front wheel coupled to the first frame, a rear wheel coupled to the second frame, a basket rotatably coupled to the second frame, the basket facing forward; and a charging module coupled to a front surface of the basket.

The wirelessly chargeable electric bicycle may further include a rotating hinge configured to fasten the second frame and the basket to each other, wherein the rotating hinge may include a first hinge bracket coupled to the second frame, a second hinge bracket coupled to the basket, a hinge shaft extending through the first hinge bracket and the second hinge bracket, a first cam coupled to the first hinge bracket, the first cam extending through the hinge shaft, a second cam coupled to the second hinge bracket, the second cam extending through the hinge shaft, and an elastic spring configured to apply tensile force such that the first cam and the second cam come into tight contact with each other, and the first cam and the second cam may include inclined surfaces of different heights on surfaces facing each other.

### ADVANTAGEOUS EFFECTS

A charging station for personal mobility devices according to the present disclosure may safely store personal mobility devices.

In addition, it is possible to provide a universal charging station capable of receiving and charging all different types of personal mobility devices.

In addition, the present disclosure may facilitate the movement of pedestrians and vehicles, since the personal mobility devices are stored and on standby in a set place.

In addition, the charging station is capable of performing charging simultaneously with storage, whereby the need for separate collection may be eliminated, and batteries can be charged immediately, whereby the time available for use may be increased.

In addition, the charging station of the present disclosure has the advantage that a plurality of storage portions is integrated to secure rigidity and the charging station is easy to install.

In addition, since a power distribution unit is located in the station, the power distribution unit is not exposed to rain, etc., whereby the risk of electric shock is low and durability is excellent.

Effects obtainable from the present disclosure are not limited by the above mentioned effects, and other unmentioned effects can be clearly understood from the above description by those having ordinary skill in the technical field to which the present disclosure pertains.

### DESCRIPTION OF DRAWINGS

FIG. 1 is a perspective view showing a charging station according to an aspect of the present disclosure.
FIG. 2 is an exploded perspective view showing the charging station according to the aspect of the present disclosure.
FIG. 3 is an exploded perspective view showing embodiments of a charging module of an electric bicycle according to another aspect of the present disclosure.
FIG. 4 is a sectional view showing the state in which an electric bicycle is received in the charging station according to the aspect of the present disclosure.
FIG. 5 is a view showing one form of an electric bicycle received in a power transmission module of the charging station according to the aspect of the present disclosure.
FIG. 6 is a view showing a hinge between a basket of the electric bicycle according to the other aspect of the present disclosure and the charging module.
FIGs. 7 and 8 are exploded perspective views showing the embodiments of the charging module of the electric bicycle according to the other aspect of the present disclosure.
FIG. 9 is a view showing another embodiment of the charging station according to the aspect of the present disclosure.
FIG. 10 is a side view and a sectional view showing a power transmission module of a charging station according to an embodiment of the present disclosure.
FIGs. 11 and 12 are views showing the state in which a personal mobility device is mounted in the charging station according to the embodiment of the present disclosure.
FIG. 13 is a view showing the flow of force by which a charging module of the personal mobility device comes into tight contact with the power transmission module of the charging station according to the embodiment of the present disclosure.

### BEST MODE FOR DISCLOSURE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be used.

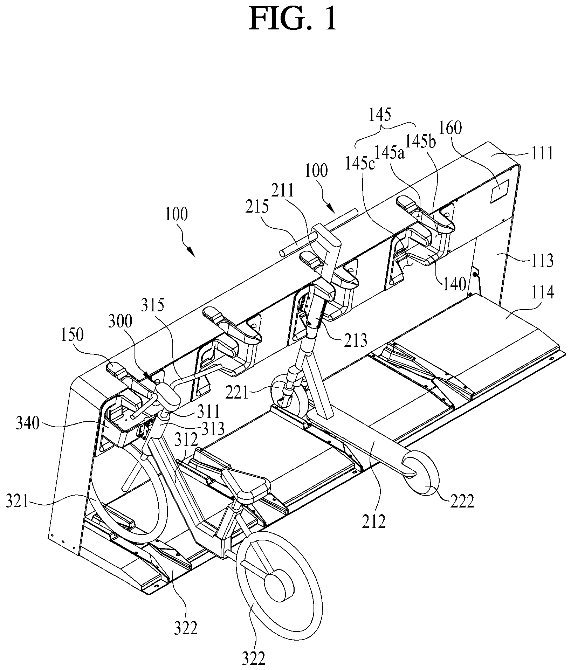

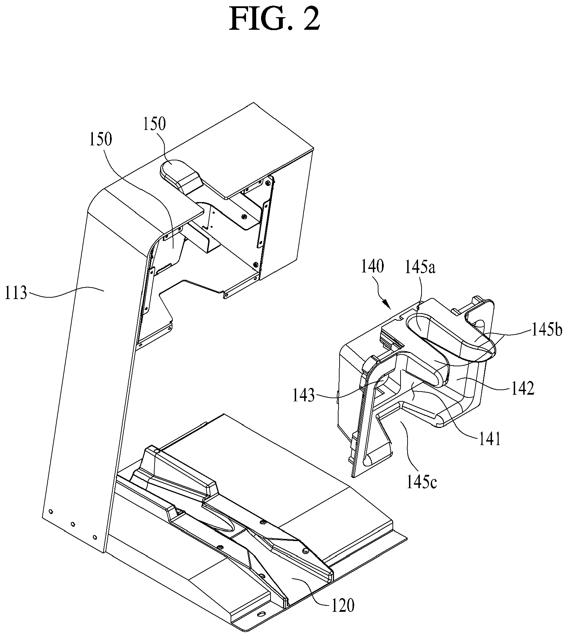

FIG. 1 is a perspective view showing a charging station 100 according to an embodiment of the present disclosure, and FIG. 2 is an exploded perspective view showing the charging station 100 according to the embodiment of the present disclosure.

The charging station 100 of the present disclosure is a charging station for charging a personal mobility device 200, wherein the personal mobility device 200 refers to a mobility device 200 used by a single person and includes a shared mobility device.

While there are many types of electric mobility devices depending on the number and disposition of wheels and the shape of a frame 110, the electric mobility device 200 receivable in the charging station 100 of the present disclosure includes a front wheel 221, a rear wheel 222, and a battery configured to provide power. For example, there is an electric kickboard or an electric bicycle.

The electric mobility device 200 includes a battery such that the electric mobility device is driven using electricity, and when the battery is depleted, the battery needs to be collected so as to be replaced or charged and installed again. Therefore, there is a problem that labor is consumed and when the battery is depleted, the battery cannot be used until the battery is collected and charged.

In addition, regulations on electric mobility devices left on the roadside have recently been strengthened, resulting in laws and regulations restricting parking spaces for the electric mobility devices. There is a problem that the electric mobility devices 200 are easily tipped over and damaged by wind or external impact during parking.

Accordingly, the present disclosure provides a charging station 100 capable of charging an electric mobility device 200 while receiving the electric mobility device 200 in a designated space such that the electric mobility device 200 can be charged directly while the electric mobility device 200 is parked in a safe manner, thereby reducing labor costs.

Consequently, the electric mobility device received in the charging station 100 such that the battery can be charged may include a charging module 230.

As shown in FIG. 1, the charging station 100 of the present disclosure may receive a plurality of personal mobility devices 200. The personal mobility device 200 in the form shown in FIG. 1 is a kickboard type personal mobility device 200 or a bicycle type personal mobility device 300. The charging station 100 of the present disclosure includes a power transmission module 130, a frame 110, a controller 160, and a wheel slope 120. The power transmission module 130 is connected to the charging module 230 of the personal mobility device 200 to charge the battery of the personal mobility device 200, wherein wired connection is possible, but the present embodiment may include a power transmission module 130 and a charging module 230 using a wireless charging method.

The frame 110 may include a lower frame 114 fixed to the floor, a vertical frame 113 extending from the lower frame 114 in the vertical direction, and an upper frame 111 connected to an upper part of the vertical frame 113 and extending in a horizontal direction, the upper frame being configured to allow a plurality of power transmission modules 130 to be located therein.

The plurality of power transmission modules 130 may be provided in the horizontally extending upper frame 111 to receive a plurality of personal mobility devices 200.

As receiving portions configured to receive the personal mobility devices 200 are integrally configured, it is advantageous in terms of durability, and it is possible to shorten the installation time by installing the personal mobility devices 200 at once without installing and connecting a plurality of stations successively.

For convenience of description, the direction shown in FIG. 1 is referred to as a front surface and the opposite direction is referred to as a rear surface. The front surface may include an opening to expose a plurality of power transmission modules 130.

The vertical frames 113 may be provided in a pair at opposite ends of the charging station 100 in the horizontal direction, as shown in FIG. 1, or may be further disposed between the respective receiving portions. An identification number or QR code 119 may be disposed on a side surface of the vertical frame 113 to identify the charging station 100.

The lower frame 114 may fix the frame 110 to the floor, and a wheel slope 120 on which the wheel of the personal mobility device 200 is seated may be mounted in the lower frame. The width of the lower frame 114 in a forward-rearward direction may be greater than that of the upper frame 111 for stable support.

The wheel slope 120 may have a predetermined width for the front wheel 221 of the personal mobility device 200 to be seated, and may include an inclined surface. The movement of the front wheel 221 along the inclined surface naturally serves to guide the personal mobility device 200 to be received in the charging station 100.

The charging station 100 of the present disclosure may receive a bicycle type personal mobility device 300 in addition to a kickboard type personal mobility device 200, as shown in FIG. 1. The kickboard type personal mobility device 200 is generally referred to as an electric kickboard 200, and the bicycle type personal mobility device 300 is referred to as an electric bicycle 300.

The kickboard type personal mobility device 200 includes a first frame 211 to which a front wheel 221 is fixed and a second frame 212 to which a rear wheel 222 is fixed, and the second frame 212 provides a footrest, which is a space for a user to step on.

The first frame 211 is rotatably coupled to the second frame 212, wherein the front wheel 221 is coupled to a lower end of the first frame and a handle 214 configured to be steered by the user is provided at an upper part of the first frame.

Turning the handle 214 may change the direction of the front wheel 221 coupled to the lower end of the first frame 211, thereby changing the direction of the personal mobility device 200. A vertically extending part of the first frame 211 is referred to as a stem 213, and a charging module 230 for charging may be located at the stem 213.

In the bicycle type personal mobility device 300, a front wheel 321 is located at a first frame 311, a rear wheel 322 is located at a second frame 312, and the first frame 311 and the second frame 312 are rotatably coupled to each other, in the same manner as in the kickboard type personal mobility device 200.

The user may adjust the direction of the front wheel 321 using a handle 314 located at an upper part of the first frame 311.

However, since the bicycle type personal mobility device 300 is used by a user sitting down, the first frame 311 has a lower height and each of the front wheel 321 and the rear wheel 322 has a larger size compared to the kickboard type personal mobility device 200.

In addition, the bicycle type personal mobility device 300 may be provided at the front thereof with a basket 340 configured to receive objects. Therefore, the charging station 100 needs a receiving portion 141 into which the basket 340 can be inserted in order to receive an upper part of the bicycle type personal mobility device 300.

The upper frame 111 may include a receiving portion 141 configured to fix the upper part of the personal mobility device 300. The charging station may include a basket box 140 into which a basket 340 can be inserted in order to receive the bicycle type personal mobility device 300.

The basket box 140 may have an open front surface and an opening 143 formed in a rear surface to expose a power transmission module 130. A stem holder 145 configured to receive the first frame 211 of the kickboard type personal mobility device 200 may be provided at an upper part or a lower part of the basket box.

The stem holder 145 may include a stem groove 145a and a stem guide 145b configured to position the stem 213, which is the vertically extending part of the first frame 211 of the kickboard type personal mobility device 200.

In the present embodiment, stem grooves 145a and 145c are formed at the upper part and the lower part of the basket box 140 and the stem guide 145b is formed only at the upper part of the basket box, but the stem guide 145b may also be provided at the lower stem groove 145c.

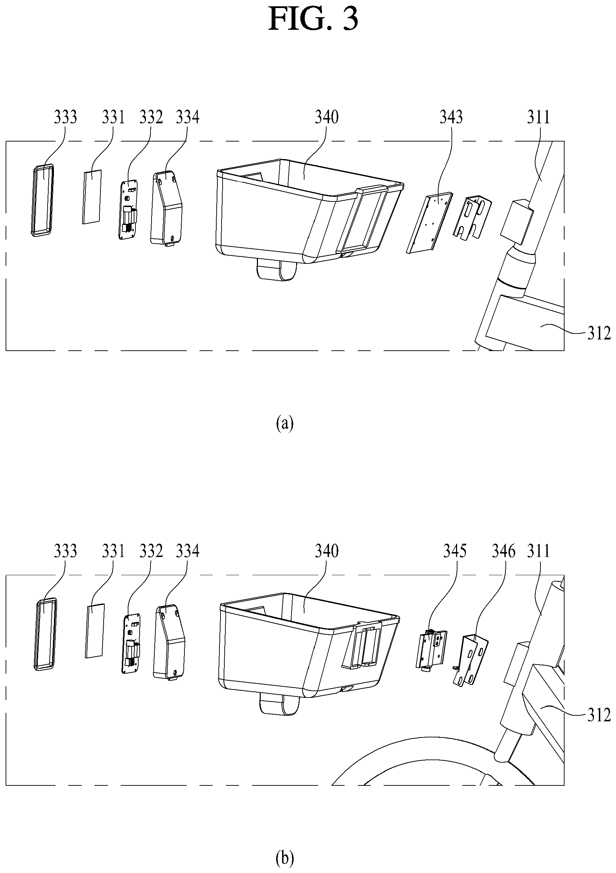

FIG. 3 is an exploded perspective view showing embodiments of a charging module 330 of an electric bicycle 300 according to another aspect of the present disclosure. In the bicycle type personal mobility device 300 having a basket 340, the charging module 330 may be disposed at a front surface of the basket, as shown in (a) and (b) of FIG. 3.

The charging module 330 may include a charging coil 333, a housing 331 configured to cover the charging coil 333, and a board portion 332 configured to control the charging coil 333. When a front surface of the basket 340 in which the charging module 330 is received is tilted downward, a front surface of the basket 340 to which the charging module 330 is coupled may be tilted upward.

(a) of FIG. 3 is an embodiment in which the basket 340 is coupled to the first frame 311. When the basket 340 is coupled to the first frame 311, turning of the handle 314 causes the first frame 311 to rotate and the basket 340 to rotate therewith.

Thus, when the front wheel 321 is located along the wheel slope 120, the basket 340 may also be received in the basket box 140.

However, when the basket is coupled to the first frame 311, the user may feel the weight of the basket 340 and the objects received in the basket 340 when turning the handle 314, making it difficult to receive heavy objects.

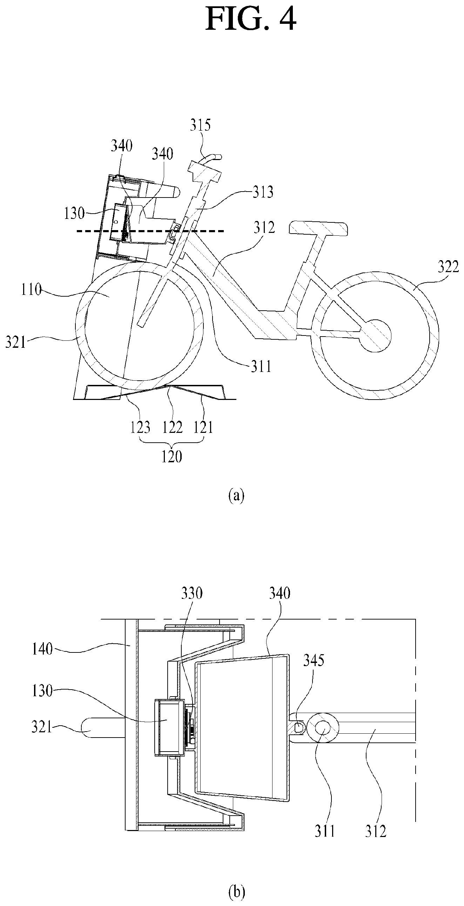

(b) of FIG. 3 is an embodiment in which the basket 340 is coupled to the second frame 312. The position of the basket 340 coupled to the second frame 312 is not changed even when the direction of the front wheel 321 is changed. FIG. 4 is a sectional view showing the state in which the electric bicycle 300 is received in the charging station 100 according to the aspect of the present disclosure. In FIG. 4, (a) is the A-A' sectional view of FIG. 1, and (b) is the B-B' sectional view of FIG. 1.

When the front wheel 321 and the rear wheel 322 are well aligned in a forward-rearward direction, as shown in (a) of FIG. 4, the basket 340 may be accurately inserted into the basket box 140 and the charging module 330 may be in tight contact with the power transmission module 130, as shown in (b).

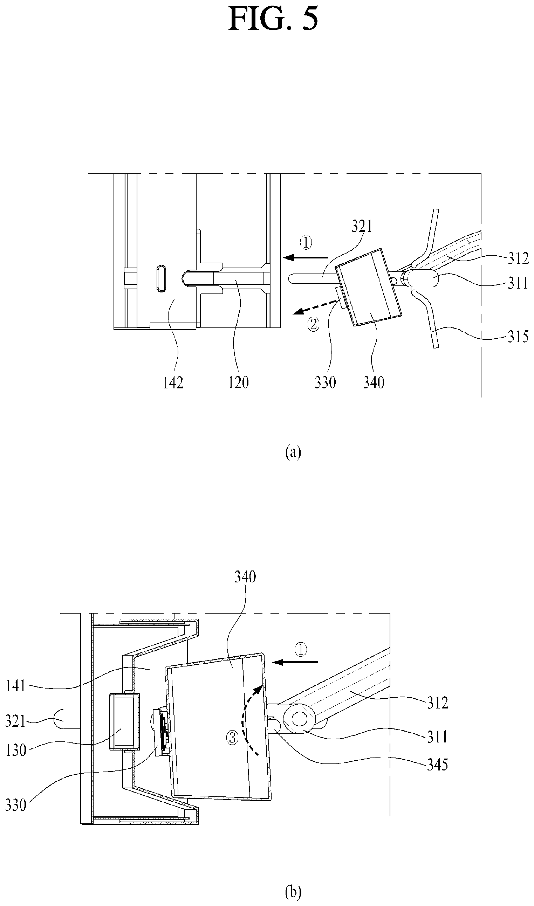

FIG. 5 is a view showing one form of the electric bicycle received in the power transmission module 130 of the charging station 100 according to the aspect of the present disclosure.

As shown in (a) of FIG. 5, the second frame 312 may be received in the charging station 100 in the state in which the second frame 312 is not disposed in line with the first frame 311 but is rotated such that the second frame faces in a direction ② different from the movement direction ① of the first frame 311.

The baskets 340 coupled to the second frame 212 may also face in the direction ② twisted relative to the basket box 140.

In order to ensure that the basket 340 in the twisted state is accurately received in the basket box 140 such that the charging module 330 is in tight contact with the power transmission module 130, the basket 340 may be rotatably coupled to the second frame 312 via a hinge 345.

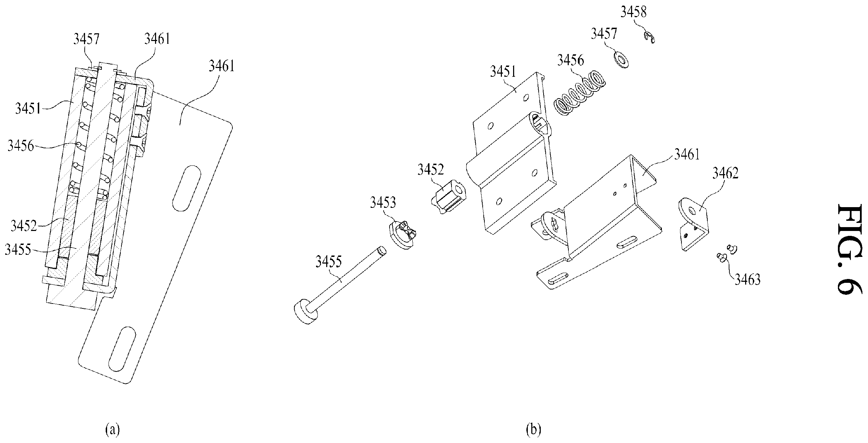

FIG. 6 is a view showing the hinge 345 between the basket 340 of the electric bicycle 300 according to the other aspect of the present disclosure and the charging module 330. (a) is a sectional view, and (b) is an exploded perspective view, wherein the hinge 345 may include a first hinge bracket 3461 coupled to frames 101 and 102 of the electric bicycle 300, a second hinge bracket 3451 coupled to the basket 340, and a hinge shaft 3455 extending through the first hinge bracket 3461 and the second hinge bracket 3462.

The second hinge bracket 3451 may include a cylindrical hinge receiving portion into which the hinge shaft is inserted, and one side of the first hinge bracket 3461 may protrude and be located on one side of the hinge receiving portion. The hinge may extend through the protrusion of the first hinge bracket 3461 and the hinge receiving portion.

The other end of the hinge shaft 3455 may also extend through a hinge cover 3462 protruding from the first hinge bracket 3461 so as to be fixed to the first hinge bracket 3461, and both ends of the hinge shaft 3455 may be fixed to the first hinge bracket 3461. A washer 3457 and an E-ring 3458 may be further included to fix the other end of the hinge shaft 3455 to the first hinge bracket 3461.

The hinge shaft 3455 may include a fixing spring 3456 and cams 3452 and 3453 to maintain the rotated state thereof. The cams may include a first cam 3453 coupled to the first hinge bracket 3461 and a second cam 3452 coupled to the second hinge bracket 3462.

Each of the first cam and the second cam may have the form of a ring into which the hinge shaft 3455 is inserted, and may include inclined surfaces having different heights depending on the position along the circumference of the hinge shaft 3455. The first cam 3453 and the second cam 3452 are disposed so as to face each other, and a fixing spring 3456 configured to provide tension to keep the curved surfaces of the pair of cams 3452 and 3453 in contact with each other may be further included.

When lateral force is applied to the basket 340, the second hinge bracket 3462 is rotated relative to the first hinge bracket 3461, and the curved surfaces of the first cam 3453 coupled to the first hinge bracket 3461 and the second cam 3452 coupled to the second hinge bracket 3462 are misaligned with each other.

At this time, the spring 3456 is compressed, and after the highest point of the inclined surface, the fixing spring 3456 is tensioned, bringing the inclined surfaces of the first cam 3453 and the second cam 3452 into tight contact with each other, and the angle of the first hinge bracket 3461 and the second hinge bracket 3462 may be fixed.

Since the basket 340 is rotatable relative to the second frame 312, the user may change the direction of the basket 340 (②->①) without changing the position of the second frame 312.

As shown in (b) of FIG. 5, the basket box 140 may include an inclined side surface such that the charging module 330 attached to the basket 340 faces the power transmission module 130. The side surface 142 of the basket box is inclined such that the basket box 140 narrows in a direction toward a rear surface thereof.

When the user pushes the personal mobility device 300 along the wheel slope 120 to receive the personal mobility device in the charging station 100, the basket 340 comes into contact with the side surface 142 of the basket box 140.

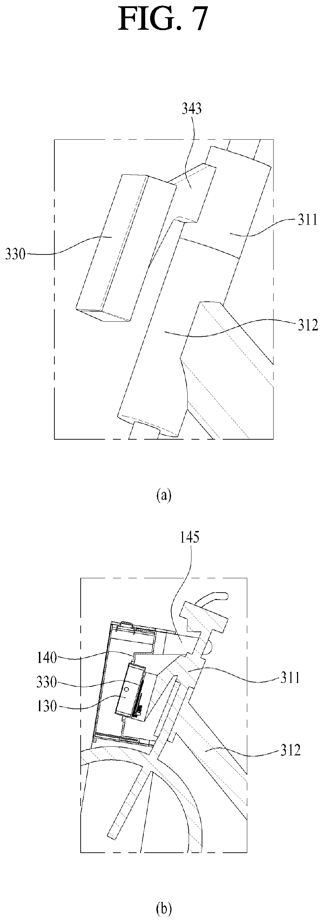

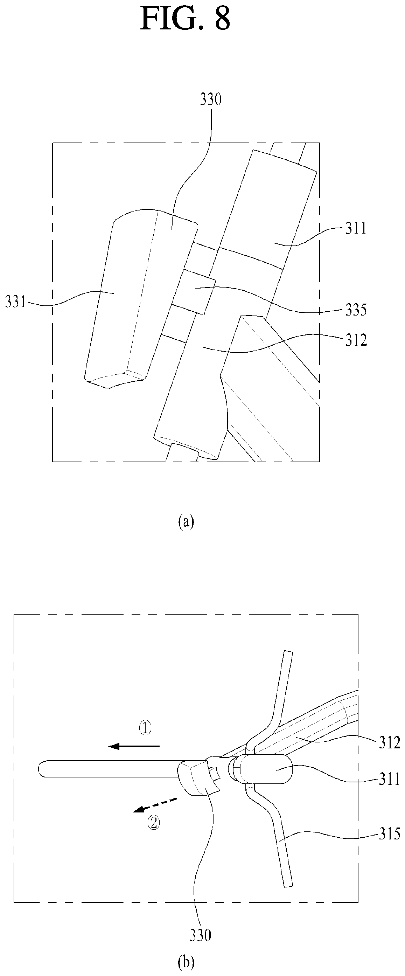

The inclined side surface 142 converts the force of the user pushing the electric bicycle 300 toward the rear surface of the charging station 100 into force that rotates the basket 340, and the basket 340 may be rotated (③) such that the front surface of the basket 340 faces the power transmission module 130. FIGs. 7 and 8 are exploded perspective views showing the embodiments of the charging module 330 of the electric bicycle 300 according to the other aspect of the present disclosure. The bicycle type personal mobility device 300 of the present embodiment has no basket 340 located at the front thereof.

FIG. 7 shows a type in which the charging module 330 is coupled to the first frame 311, and FIG. 8 shows a type in which the charging module 330 is coupled to the second frame 312.

The height of the charging module 330 coupled to the first frame 311 must be determined in consideration of the position of the power transmission module 130, and therefore a bracket 343 extending from the first frame 311 may be used.

As in the embodiment shown in (a) of FIG. 4, the charging module 330 coupled to the first frame 311 is received in a manner consistent with the direction of the front wheel 321 and therefore, when the personal mobility device 300 is pushed along the wheel slope 120, the charging module 330 may be accurately aligned with the power transmission module 130.

Meanwhile, the charging module 330 coupled to the second frame 312 may be hingedly coupled (335) so as to be rotatable relative to the second frame 312, as shown in FIG. 8. When the second frame 312 is disposed twisted relative to the first frame 311, as shown in (b) of FIG. 8, only the charging module 330 may be rotated so as to face forward using the hinge 335.

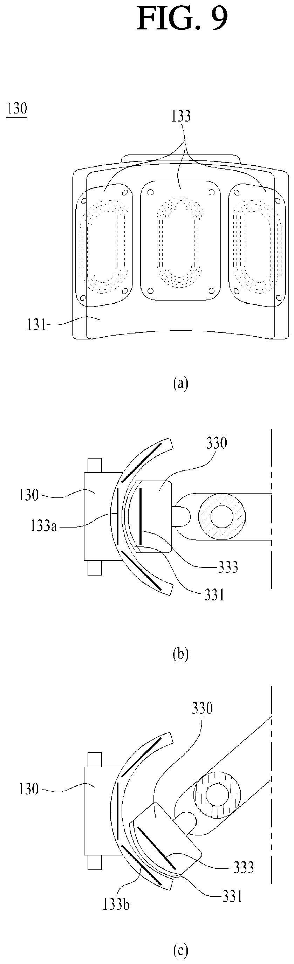

The design of the power transmission module 130 may be modified to allow charging regardless of the direction of the charging module 330. FIG. 9 is a view showing another embodiment of the charging station 100 according to the aspect of the present disclosure.

The power transmission module 130 may include a module case 131 having a curved contact surface configured such that both ends of a front surface (contact surface) protrude. In addition, a plurality of transmission coils 133 may be disposed so as to correspond to the extended contact surface of the power transmission module 130.

Three transmission coils 133 may be disposed, as shown in (a) of FIG. 9, power may be supplied to the charging coil using a first transmission coil 133a when the charging module 330 is disposed in place, as shown in (b), and power may be supplied to the charging coil 333 using a second transmission coil 133b when coupling is obliquely performed, as shown in (c).

A front surface of the housing 311 may be curved such that the contact surface of the charging module 330 with the power transmission module 130 is also curved so as to correspond to the curved shape of the power transmission module 130.

The power transmission module 130 and the charging module 230 or 330 must be in tight contact to enable charging, and since the personal mobility device 200 or 300 is of various types, the angle of the stem 213 or 313 to which the charging module 230 or 330 is fixed may vary from product to product. In addition, the angle of the stem 213 or 313 at the floor surface changes if the personal mobility device 200 is twisted when seated in the charging station 100 or if the floor on which the rear wheel 222 is located is tilted.

The power transmission module 130 may be configured to move within a predetermined range in consideration of these situations.

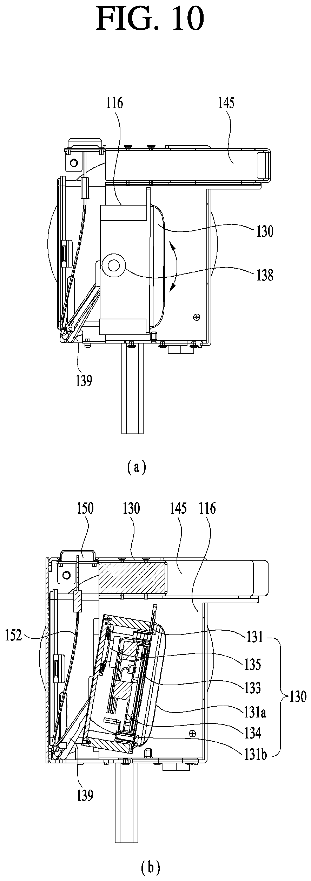

FIG. 10 is a side view and a sectional view showing a power transmission module 130 of a charging station 100 according to an embodiment of the present disclosure.

The power transmission module 130 and the charging module 230 may include coils for transmitting and receiving power, respectively, and may include a board portion 134 configured to control the same.

The power transmission module 130 includes a module case 131 and a transmission coil 133 and a board portion 134 mounted on the module case 131.

In the present embodiment, the transmission coil 133 may include a TX contact portion 131a mounted on a front surface of the module case 131 and in contact with the charging module 230 while covering the transmission coil 133. The TX contact portion 131a may include a guide protrusion configured to guide a charging coil 133 of the charging module 230 so as to be located in alignment with the transmission coil 133.

The module case 131 may further include a plurality of rear covers 131b and may be further provided with a waterproof member 132 for waterproofing between the rear covers 131b and the module case 131.

A speaker 135 may be further provided for notification as needed, and the speaker 135 may output a notification sound upon detecting touch of the charging module 230.

The power transmission module 130 may further include a magnet 137, which may be magnetically coupled to a magnet or a ferromagnetic body 237 of the charging module 230 such that the charging coil 133 of the charging module 230 can be fixed in place.

The difference in the horizontal position between the front wheel 221 or 321 and the charging module 230 or 330 located on the stem 213 or 313 may vary from one product to another, but since the charging station 100 of the present disclosure does not specify the position of the front wheel 221 or 321, it is sufficient for the front wheel 221 to be located on the second inclined surface 123, and since the charging module 230 or 330 is received when the charging module comes into contact with the power transmission module 130, the position of the power transmission module 130 in the forward-rearward direction does not need to change.

However, the power transmission module may be configured to rotate about a horizontal axis to adjust the tilted angle. The module case 131 may include a pivoting shaft 138 protruding from opposite side surfaces, and may further include a module box 116 to which the pivoting shaft 138 is coupled and in which the power transmission module 130 is received.

The module box 116 is a basket-shaped member inserted into the opening in the upper frame 111, wherein a front surface of the module box is open and the power transmission module 130 is located in a rear part of the module box. The rotation axis 138 of the power transmission module 130 is inserted into recesses located at opposite side surfaces of the module box 116, and the power transmission module 130 is rotatable.

Meanwhile, an elastic portion 139 may be further included to provide force to push the power transmission module 130 in the forward direction such that the power transmission module 130 is in tight contact with the charging module 230. When force is applied at the front surface of the power transmission module 130, the elastic portion 139 may be deformed but provides tension to push the power transmission module 130 in the forward direction.

The present embodiment is an embodiment in which the power transmission module 130 is basically disposed in the vertical direction and the elastic portion 139 is disposed on a rear surface of a lower part of the power transmission module. Generally, since the stem 213 of the personal mobility device 200 is disposed in the state in which a lower part of the stem protrudes, the elastic portion that pushes the rear surface of the lower part of the power transmission module 130 in the forward direction allows the power transmission module 130 to tilt along the inclined surface of the charging module 230 and to return to the original shape thereof when the personal mobility device 200 is removed.

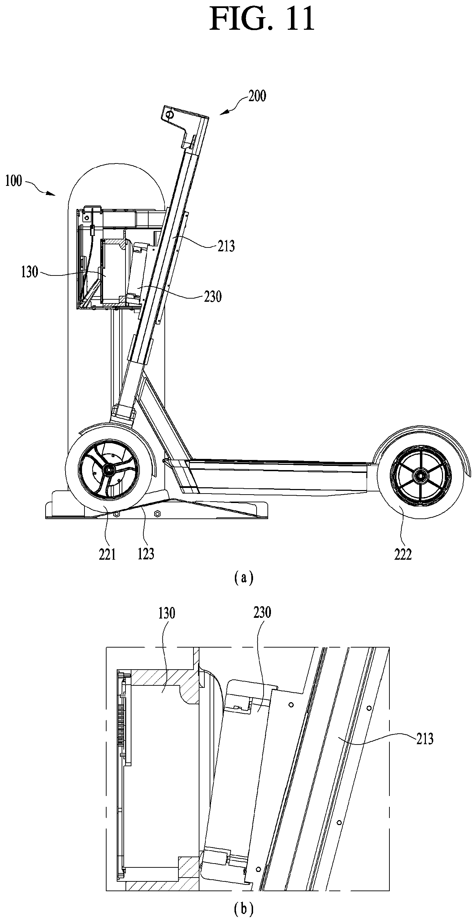

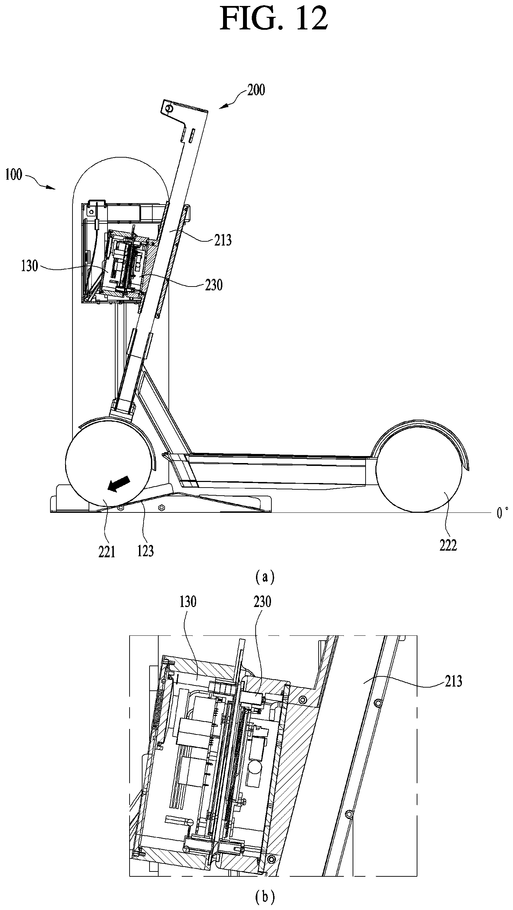

FIGs. 11 and 12 are views showing the state in which a kickboard type personal mobility device is mounted in the charging station 100 according to the embodiment of the present disclosure. Although the kickboard type personal mobility device 200 is shown, a bicycle type personal mobility device 300 may be similarly mounted.

FIG. 11 is a view of the charging module 230 at the beginning of contact with the power transmission module 130, and FIG. 12 is a view showing the charging module 230 in tight contact with the power transmission module 130.

As shown in FIG. 11, the front wheel 221 of the personal mobility device 200 moves along the second inclined surface 123 toward the rear of the charging station 100, and one point of the charging module 230 contacts one point of the power transmission module 130.

If the angle of the power transmission module 130 does not change, the charging coil 133 of the charging module 230 and the transmission coil 133 of the power transmission module 130 are not aligned with each other and no charging is performed, but the power transmission module 130 of the present disclosure may rotate at an inclination corresponding to the angle of the charging module 230 and the angle may change as shown in (b) of FIG. 12.

As shown in (a) of FIG. 12, the personal mobility device 200 may move a little farther toward the rear of the charging station 100 along the second inclined surface 123, and the power transmission module 130 may be rotated to be aligned with the charging module 230 in tight contact while having the same angle as the charging module, as shown in (b) of FIG. 12.

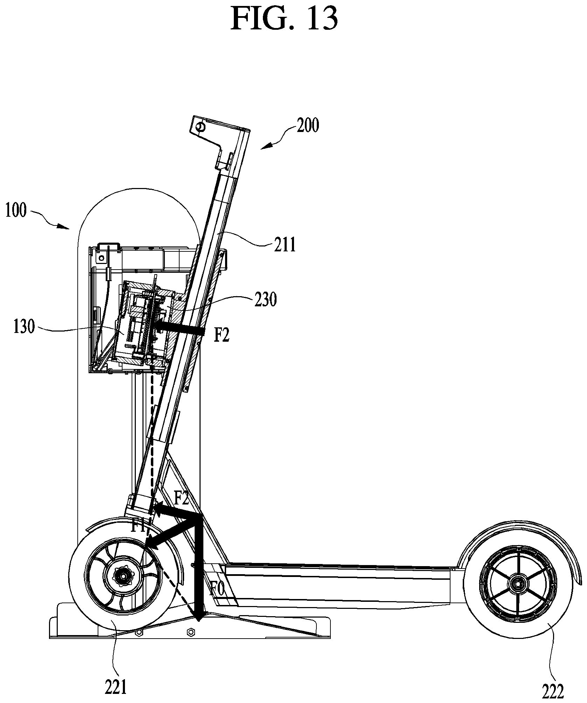

FIG. 13 is a view showing the flow of force by which the charging module 230 of the personal mobility device 200 comes into tight contact with the power transmission module 130 of the charging station 100 according to the embodiment of the present disclosure.

Force F0 oriented in the direction of gravity by the weight of the personal mobility device 200 is changed in direction by the second inclined surface 123, and force F2 is generated in which the charging module 230 presses the power transmission module 130 in the forward-rearward direction by force F1 changed by the inclined surface.

The power transmission module 130 rotates and tilts in a direction corresponding to the direction of force F2 and comes into tight contact with the charging module 230.

The user may push the personal mobility device 200 only until the front wheel 221 of the personal mobility device 200 is located at the apex 122 of the wheel slope 120, which naturally brings the charging module 230 into tight contact with the power transmission module 130 and charging may occur.

The notification may be provided through the speaker 135 of the power transmission module 130 or a lamp 150 located at an upper side of the frame 110. That is, the lamp 150 may be illuminated blue when the charging module is disposed at the correct position and red when the position is incorrect and charging is not possible.

Whether the charging module 230 is disposed at the correct position may be determined by detecting a change in the magnetic field of the transmission coil 133 of the power transmission module 130. Once there is a change in the magnetic field, it may be determined that the personal mobility device 200 has been received and it may be determined that the charging module 230 is disposed at the correct position to provide sufficient power for charging.

Alternatively, a separate sensor may be used to detect whether the personal mobility device 200 has been received. For example, a pressure sensor may be provided on the wheel slope 120 to determine that the personal mobility device 200 has been received when the personal mobility device 200 is on the wheel slope 120, and may provide charging and notification.

The controller 160 of the present disclosure is connected to each of the power transmission modules 130 to control the plurality of power transmission modules and may be mounted in the frame 110.

A conventional charging station 100 is configured to receive only one personal mobility device 200, and a controller 160 configured to connect and control a plurality of charging stations 100 is separately provided. The charging stations 100 are connected to each other via a cable extending through the bottoms of the charging stations or exposed on the ground, which presents aesthetic or safety issues.

However, the charging station 100 of the present disclosure has a cable disposed in the frame 110 to control each power transmission module 130. The controller 160 may detect the number of personal mobility devices 200 received in the charging station and transmit available receiving spaces to a server.

The controller 160 may be located in the control box 161 in the frame 110, and may include and an earth leakage breaker 165 configured to detect earth leakage and cut off power. Conventionally, the earth leakage breaker 165 is located outside the frame 110 to connect the plurality of charging stations 100, which may easily cause earth leakage, but the earth leakage breaker 165 of the present disclosure is less likely to cause earth leakage even in weather such as rain.

A power distribution module 163 configured to appropriately distribute power to the power transmission modules 130 may be provided, and a communication module 162 for connection with the server may also be provided.

The charging station 100 for personal mobility devices 200 according to the present disclosure may safely store the personal mobility devices 200.

In addition, it is possible to provide a universal charging station capable of receiving and charging all different types of personal mobility devices.

In addition, the present disclosure may facilitate the movement of pedestrians and vehicles, since the personal mobility devices 200 are stored and on standby in a set place.

In addition, the charging station 100 is capable of performing charging simultaneously with storage, whereby the need for separate collection may be eliminated, and the batteries can be charged immediately, whereby the time available for use may be increased.

In addition, the charging station 100 of the present disclosure has the advantage that a plurality of storage portions is integrated to secure rigidity and the charging station is easy to install.

In addition, since a power distribution unit is located in the station, the power distribution unit is not exposed to rain, etc., whereby the risk of electric shock is low and durability is excellent.

The above detailed description should not be construed as being limitative in all terms, but should be considered as being illustrative. The scope of the present disclosure should be determined by reasonable analysis of the accompanying claims, and all changes in the equivalent range of the present disclosure are included in the scope of the present disclosure.

## Claims

1. A charging station for personal mobility devices capable of receiving and charging a bicycle type personal mobility device or a kickboard type personal mobility device, the charging station comprising:
a power transmission module comprising a wireless power transmission coil;
a frame in which the power transmission module is mounted;
a receiving portion coupled to the frame, the receiving portion being located at a front surface of the power transmission module; and
a wheel slope coupled to the frame, the wheel slope being configured to allow a front wheel of the personal mobility device to be seated thereon, wherein
the receiving portion comprises:
a basket box having an open front surface configured to allow a basket of the bicycle type personal mobility device to be received therethrough, the basket box comprising an opening formed in a rear surface thereof, the opening being configured to expose the power transmission module; and
a stem holder located at an upper part of the basket box, the stem holder being configured to allow a stem of the kickboard type personal mobility device to be seated thereon.

2. The charging station of claim 1, wherein the stem holder comprises:
a first stem groove depressed rearward in the upper part of the basket box; and
stem guides protruding forward from both sides of the first stem groove.

3. The charging station of claim 2, wherein the stem holder further comprises a second stem groove depressed rearward at a position corresponding to the first stem groove at a lower part of the basket box.

4. The charging station of claim 1, wherein the basket box comprises inclined surfaces formed at left and right sides thereof such that a width gradually narrows in a rearward direction.

5. The charging station of claim 1, wherein
the power transmission module comprises a curved module housing having left and right sides protruding in a forward direction, and
the power transmission coil is disposed in plural in a horizontal direction of the module housing.

6. The charging station of claim 1, wherein
the power transmission module comprises:
a module housing configured to receive the power transmission coil;
a module box hingedly coupled to left and right sides of the module housing, the module box being fixed to the frame; and
an elastic portion located between a rear surface of a lower part of the module housing and the module box, and
when the personal mobility device is located on the second inclined surface, the elastic portion is compressed and a front surface of the module case is tilted downward.

7. The charging station of claim 1, wherein
the wheel slope comprises:
a first inclined surface extending upward; and
a second inclined surface extending downward from the first inclined surface, and
the power transmission module and the charging module of the personal mobility device are in contact with each other when the front wheel of the personal mobility device is located on the second inclined surface.

8. The charging station of claim 7, further comprising sidewalls located on left and right sides of the wheel slope, the sidewalls being configured to fix the front wheel in a lateral direction.

9. The charging station of claim 1, wherein
the frame includes:
an upper frame extending in a horizontal direction;
a pair of side frames located on opposite sides of the upper frame; and
a lower frame configured to connect the pair of side frames to each other, the wheel slope being fixed to the lower frame, and
the power transmission module and the receiving portion disposed along the upper frame in a horizontal direction are provided in plural.

10. A wirelessly chargeable electric bicycle comprising:
a first frame comprising a stem and a handle coupled to an upper part of the stem;
a second frame pivotably coupled to the stem;
a front wheel coupled to the first frame;
a rear wheel coupled to the second frame;
a basket rotatably coupled to the second frame, the basket facing forward; and
a charging module coupled to a front surface of the basket.

11. The wirelessly chargeable electric bicycle of claim 10, further comprising:
a rotating hinge configured to fasten the second frame and the basket to each other, wherein
the rotating hinge comprises:
a first hinge bracket coupled to the second frame;
a second hinge bracket coupled to the basket;
a hinge shaft extending through the first hinge bracket and the second hinge bracket;
a first cam coupled to the first hinge bracket, the first cam extending through the hinge shaft;
a second cam coupled to the second hinge bracket, the second cam extending through the hinge shaft; and
an elastic spring configured to apply tensile force such that the first cam and the second cam come into tight contact with each other, and
the first cam and the second cam comprise inclined surfaces of different heights on surfaces facing each other.
